Europäisches Patentamt

European Patent Office

Office européen des brevets

(11) Veröffentlichungsnummer: **0 106 261**
A1

# (12) EUROPÄISCHE PATENTANMELDUNG

(21) Anmeldenummer: 83109894.2

(22) Anmeldetag: 04.10.83

(51) Int. Cl.³: **B 23 K 11/16**
F 28 F 1/10, F 28 F 3/02

(30) Priorität: 07.10.82 DE 3237143
01.02.83 DE 3303244

(43) Veröffentlichungstag der Anmeldung:
25.04.84 Patentblatt 84/17

(84) Benannte Vertragsstaaten:
AT BE CH DE FR GB IT LI NL SE

(71) Anmelder: Schäfer Werke GmbH
Pfannenbergstrasse 2
D-5908 Neunkirchen(DE)

(72) Erfinder: Meike, Klaus
Eiserfelder Hütte 22
D-5900 Siegen-Eiserfeld(DE)

(74) Vertreter: Schlee, Richard, Dipl.-Ing. et al,
Patentanwälte Dipl.-Ing. R. Schlee Dipl.-Ing. A. Missling
Bismarckstrasse 43
D-6300 Lahn-Giessen 1(DE)

(54) Verfahren zur Verbindung zweier Teile, die nicht unmittelbar miteinander verschweissbar sind.

(57) Eine erste dünne Wand (1a) aus einem Material, z.B. aus Aluminium, wird mit einer zweiten dünnen Wand (2) aus schweißbarem Material, z.B. Stahl, mit Hilfe von Zusatzmaterial (4) verbunden. Das Zusatzmaterial (4), z.B. ein Blech, ist mit der zweiten Wand (2) verschweißbar, während die erste Wand (1a) mit der zweiten Wand (2) nicht verschweißbar ist. Mittels Schweißelektroden (5, 6) wird ein starker Strom durch die Materialschichten (4, 1a, 2) geschickt. Dabei wird die erste Wand (1a) durchgeschmolzen und danach das Zusatzmaterial (4) durch Widerstandspreßschweißen mit der zweiten Wand (2) verbunden.

Alternativ kann die erste Wand (1a) auch Löcher aufweisen, durch die das Zusatzmaterial mittels der Schweißelektrode (5) hindurchgedrückt wird.

Auf diesen Weise Sollen nicht miteinander verschweißbare Materialien mit geringen Kosten miteinander verbunden werden, z.b. Sollen damit an einer Heizplatte (2) aus Stahl gut wärmeleitende Bleche (1a) aus Aluminium befestigt werden.

Fig. 8

Patentanwälte

Dipl.-Ing. Richard Schlee
Dipl.-Ing. Arne Missling

SCHÄFER WERKE GMBH,

5908 Neunkirchen, Kreis Siegen


## Verfahren zur Verbindung zweier Teile, die nicht unmittelbar miteinander verschweißbar sind


### Beschreibung:

Die Erfindung bezieht sich auf ein Verfahren zur Verbindung eines eine dünne Wand aufweisenden ersten Teiles mit einer dünnen Wand eines zweiten Teiles aus schweißbarem Material, wobei der erste Teil aus einem Material besteht, das mit dem zweiten Teil nicht verschweißbar ist und wobei die dünne Wand des ersten Teiles an der dünnen Wand des zweiten Teiles anliegt.

Das Verschweißen von Teilen ist ein besonders wirtschaftliches Verfahren für deren Verbindung. Das Verschweißen läßt sich aber nur begrenzt anwenden, da Voraussetzung hierfür ist, daß die Materialien miteinander verschweißbar sind. Hauptsächlich sind gleiche oder im wesentlichen gleiche Metalle und Metallegierungen miteinander verschweißbar. Nicht miteinander verschweißbar sind z.B. Aluminium und Stahl. Für die Verbindung verschiedener Materialien, die nicht miteinander verschweißbar sind, besteht häufig ein Bedürfnis. Bisher mußten für solche Verbindungsaufgaben Verbindungselemente, wie Nieten oder Schrauben, verwendet werden. Weitere mögliche Verbindungstechniken, wie die Löttechnik und die Klebetechnik sind ebenfalls nachteilig und auch teuer. Zwar kann man mit der Löttechnik einen guten Wärmeübergang erzielen, muß jedoch ein sehr teures Verfahren in Kauf nehmen. Die Klebetechnik hat entscheidende Nachteile in Bezug auf Wärmeübergang, maximale Temperaturbeanspruchung und Festigkeit. Die Ausnutzung des an sich vorteilhaften Punktschweißverfahrens war nicht ohne weiteres möglich.

Der Erfindung liegt die Aufgabe zugrunde, ein Verfahren vorzuschlagen, nach dem Teile, die sich nicht direkt miteinander verschweißen lassen, unter Ausnutzung eines Schweißverfahrens miteinander verbunden werden können.

Wenn der Schmelzpunkt des ersten Teiles niedriger ist als der Schmelzpunkt des zweiten Teiles, wird diese Aufgabe erfindungsgemäß dadurch gelöst, daß an der der Anlagestelle gegenüberliegenden Seite der dünnen Wand Zusatzmaterial angeordnet ist, das mit dem Material des zweiten Teiles verschweißbar ist und daß das Zusatzmaterial unter Durchschmelzen der dünnen Wand des ersten Teiles mit der dünnen Wand des zweiten Teiles durch stellenweises Widerstandspreßschweißen verschweißt wird, wobei die für das Durchschmelzen nötige Wärme durch einen elektrischen Strom erzeugt wird, der mittels Elektroden durchgeleitet wird, die anschließend an das Durchschmelzen für das Widerstandspreßschweißen verwendet werden.

Dieses Verfahren hat den Vorteil, daß eine Vorbearbeitung des ersten Teiles nicht erforderlich ist. Auch erreicht man durch die Schmelzung des ersten Teiles, daß durch die Schmelze ein lückenloses Ausfüllen des Zwischenraumes zwischen erstem Teil und zweitem Teil entsteht, was ein besonders enges Anliegen und damit z.B. eine gut wärmeleitende Verbindung ergibt.

Ein Verfahren gemäß einer weiteren Lösung der Erfindungsaufgabe ist auch dann anwendbar, wenn der Schmelzpunkt des

- 3 -

ersten Teiles höher ist als der Schmelzpunkt des zweiten Teiles. Diese Lösung ist dadurch gekennzeichnet, daß auf die der Anlagestelle gegenüberliegende Seite der dünnen Wand Zusatzmaterial in Form mindestens eines Bleches aufgelegt wird, das mit dem Material des zweiten Teiles verschweißbar ist und daß das Blech durch mindestens ein im ersten Teil vorher gefertigtes Loch unter Ausbeulung des Bleches mittels einer einen starken Strom zuführenden Schweißelektrode hindurchgedrückt und am zweiten Teil zur Anlage gebracht und mit diesem Teil durch Widerstandspreßschweißen verschweißt wird, wobei die genannte Elektrode das Blech bis zum Rand des Loches im ersten Teil einbeult.

Mit beiden Verbindungsverfahren lassen sich Verbindungen herstellen, bei denen der erste Teil einen engen Kontakt mit dem zweiten Teil hat. Beispielsweise läßt sich damit eine gut wärmeleitende Verbindung zwischen Stahl und Aluminium herstellen, wobei der erste Teil aus Aluminium und der zweite Teil aus Stahl besteht.

Besonders vorteilhaft ist es, das Zusatzmaterial in Form eines Bleches, z.B. eines Blechstreifens, aufzubringen (Ansprüche 3 und 4). Hierbei kann ein solches Blech aus Zusatzmaterial mehrere Schweißstellen erfassen (Anspruch 4). Bei einer solchen Ausführungsform des Verfahrens erreicht man, daß das Blech eine Andruckwirkung der dünnen Wand des ersten Teiles an die dünne Wand des zweiten Teiles auch im Bereich außerhalb der eigentlichen Verschweißungsstelle bewirkt.

Das Zusatzmaterial kann auch in Form kleiner Teilchen aufgebracht werden, z.B. in Form von Metallspänen oder dergleichen (Anspruch 5). Dieses Verfahren ist besonders wirtschaftlich, da Abfallmaterial verwertet wird.

Besonders vorteilhaft ist (Anspruch 6) die Anwendung der Verfahren gemäß der Erfindung für die Befestigung eines ersten Teiles aus Aluminium an einem zweiten Teil aus Stahl, insbesondere für die Befestigung eines Konvektionsbleches aus Aluminium an einem Heizkörper aus Stahl. Konvektionsbleche aus Aluminium gestatten eine besonders vorteilhafte Ausbildung eines Wärmetauschers, insbesondere eines Heizkörpers.

Die Erfindung wird im folgenden anhand der beigefügten Zeichnung weiterhin erläutert. Es zeigen:

Fig. 1 in perspektivischer Darstellung einen Teil eines Wärmetauschers,

Fig. 2 bis 6 verschiedene Formen von Wärmetauschflächen,

Fig. 7 einen Teilschnitt durch einen Wärmetauscher, der nach einem Verfahren gemäß einer ersten Ausführungsform der Erfindung hergestellt ist,

Fig. 8 einen entsprechenden Querschnitt, der nach einer zweiten Ausführungsform des Verbindungsverfahrens hergestellt ist,

Fig. 9 einen entsprechenden Querschnitt durch einen Wärmetauscher, der gemäß einer dritten Ausführungsform der Erfindung hergestellt ist,

Fig.10 in perspektivischer Darstellung eines als Heizkörper mit Konvektionsblech ausgebildeten Wärmetauscher,

Fig.11 einen Horizontalschnitt durch den Wärmetauscher nach Fig. 10 im Zustand vor der Befestigung des Konvektionsbleches an einer Heizplatte,

Fig.12 einen entsprechenden Querschnitt im Zustand nach der Befestigung des Konvektionsbleches an der Heizplatte,

Fig. 13 einen vertikalen Schnitt nach Linie XIII-XIII in Fig. 11 im Zustand vor der Befestigung des Konvektionsbleches an der Heizplatte und

Fig. 14 einen vertikalen Schnitt nach Linie XIV-XIV in Fig. 12 im Zustand nach der Verbindung des Konvektionsbleches mit der Heizplatte.

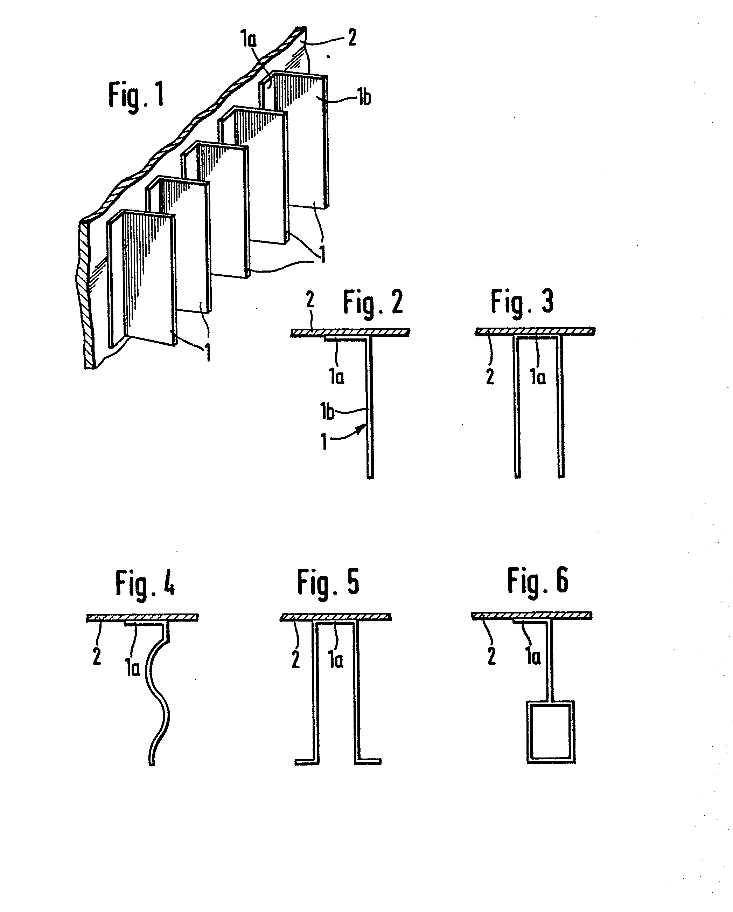

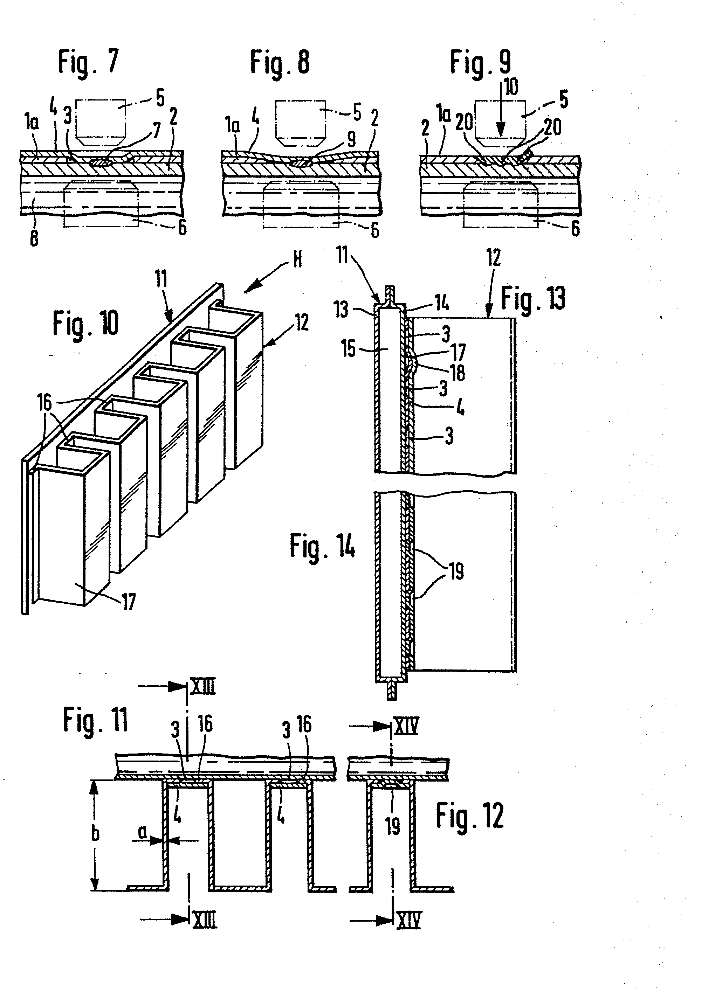

Der Wärmetauscher nach Fig. 1 besteht aus mehreren ersten Teilen 1 und einem zweiten Teil 2. Es sei angenommen, daß die ersten Teile 1 aus Aluminium bestehen und Wärme an die Umgebung abgeben sollen und daß der zweite Teil 2 eine Heizplatte aus Stahl ist, der auf irgendeine Art und Weise Wärme zugeführt wird, z.B. durch erwärmtes Wasser, und die Wärme an die lamellenartigen ersten Teile 1 abgeben soll. Die Teile 1 sind winkelförmig ausgebildet und haben einen kurzen Winkelschenkel 1a und einen langen Winkelschenkel 1b. Damit die Wärme aus der Heizplatte 2 möglichst gut auf die Lamellen 1 übertragen werden kann, ist es erforderlich, daß der Schenkel 1a möglichst ohne Zwischenraum fest an die Heizplatte 2 angedrückt ist. Dies läßt sich mit den Verbindungsverfahren erzielen, die im folgenden anhand der Fig. 7 8 und 9 betrachtet werden sollen.

Bei dem Verbindungsverfahren gemäß Fig. 7 wird zunächst der Schenkel 1a einer zu befestigenden Lamelle mit einer Reihe aus Löchern 3 versehen. Auf die Oberseite des Schenkels 1a wird ein Blechstreifen 4 aus Zusatzmaterial aufgelegt, der vorzugsweise die gleiche Länge hat wie die Lamellen 1. Der Streifen 4 überdeckt dabei mehrere Löcher 3. Der Streifen 4 besteht vorzugsweise aus dem gleichen Material wie die Wand der Heizplatte 2, also z.B. aus Stahl. Auf jeden Fall müssen die Materialien der Wand der Heizplatte 2 und des Blechstreifens 4 miteinander verschweißbar sein. Nach dem Auflegen überbrückt der Blechstreifen 4 die Löcher 3, d. h. napfförmige Vertiefungen, wie in Fig. 7 zu sehen, sind in diesem Stadium noch nicht vorhanden.

Um die Verschweißung herzustellen, werden Schweißelektroden 5 und 6 angesetzt. Diese werden kräftig gegeneinander gepreßt, wobei der Blechstreifen 4 an den Verschweißungsstellen in die Löcher 3 eingezogen wird. An der Berührungsstelle zwischen der Heizplatte 2 und dem Streifen 4 wird das Material durch einen hohen elektrischen Strom so stark erwärmt, daß es zum Schmelzen kommt, wobei eine Verschweißung 7 entsteht.

Alternativ zu dem beschriebenen Vorgehen könnte man den Blechstreifen 4 auch schon vor dem Ansetzen der Schweißelektroden an den vorgesehenen Verschweißungsstellen mit Noppen versehen, die in die Löcher 3 eingreifen. Dadurch würde man eine formschlüssige Ausrichtung der Blechstreifen auf die Lochungen gewinnen, müßte allerdings einen besonderen Arbeitsgang für das Eindellen des Blechstreifens 4 vorsehen.

Durch die Verschweißungsstellen 7 wird der Blechstreifen 4 kräftig gegen den Schenkel 1a der zu befestigenden Lamelle gedrückt, wodurch die Lamelle ihrerseits fest gegen die Heizplatte 2 angedrückt wird.

Zur Klarstellung sei bemerkt, daß die Schicht 8 unterhalb der Wand keine feste Schicht zu sein braucht, sondern z.B. aus einem flüssigen Heizmedium, wie z.B. Wasser, bestehen kann.

Fig. 8 illustriert ein Verfahren, bei dem eine vorherige Lochung des Schenkels 1a der Lamelle 1 nicht erforderlich ist. Auch bei diesem Verfahren wird auf den Schenkel 1a ein Blechstreifen 4 aufgelegt, der zunächst eben ist. Nach dem Ansetzen von Punktschweißelektroden 5, 6 und dem Durchschicken eines starken Stromes schmilzt das Material der Lamelle 1 und wird durch den Preßdruck der Elektrode 5 nach der Seite hin verdrängt, so daß der Blechstreifen 4 an die Heizplatte 2 angedrückt werden kann. Nach diesem Andrücken schmilzt sowohl der Streifen 4 als auch die Heizplatte 2 an, wodurch eine Verschweißungsstelle 9 entsteht.

Das geschmolzene Material wird zum Teil auch verdampfen und an den Seitenrändern des Schenkels 1a entweichen. Ein Teil des geschmolzenen Materials verteilt sich um die Schweißstelle 9, wodurch eine besonders gut wärmeleitende Verbindung zwischen dem Schenkel 1a und der Heizplatte 2 entsteht.

Bei dem Verfahren gemäß Fig. 8 muß das Material des ersten Teiles (Lamelle 1) einen niedrigeren Schmelzpunkt haben als das Material der Heizplatte 2. Dies ist beispielsweise der Fall, wenn die Lamelle 1 aus Aluminium und die Heizplatte 2 aus Stahl besteht, wie dies für den vorliegenden Fall angenommen wird.

Fig. 9 illustriert ein Verfahren, bei dem als mit der Heizplatte 2 verschweißbares Zusatzmaterial kleine Partikel verwendet werden, z.B. Stanzbutzen, Späne usw. Dieses Material wird an der insgesamt mit 10 bezeichneten Verschweißungsstelle auf den Schenkel 1a der Lamelle aufgestreut. Beim Hindurchschicken eines Schweißstromes über Punktschweißeleketroden 5, 6 schmilzt das Material des Schenkels 1a, bis schließlich die aufgestreuten Metallpartikel mit der Heizplatte 2 in Berührung kommen. Danach findet eine Verschweißung dieser Partikel mit der Heizplatte 2 statt. Die Verbindung erfolgt dadurch, daß die Partikel teilweise in das Material des Schenkels 1a eingebettet bleiben und andererseits mit der Heizplatte 2 verschweißt sind, wodurch eine Art Verzahnung entsteht.

Das körnige Zusatzmaterial 20 kann grobdosiert aufgebracht werden, z.B. dadurch, daß es in Form eines Streifens auf den zu befestigenden Schenkel 1a aufgestreut wird, und daß nach dem Schweißvorgang überschüssiges Material abgesaugt wird.

Fig. 2 zeigt im Querschnitt die Lamellenform gemäß Fig. 1. Die Fig. 3 bis 6 zeigen weitere mögliche Lamellenformen. Bei allen diesen Lamellenformen ist jedoch ein Schenkel 1a vorhanden, der an der Heizplatte 2 anliegt und mit dieser auf die Art und Weise verbunden ist, die anhand der Fig. 7 bis 9 beschrieben wurde.

Die Fig. 10 bis 14 illustrieren die Anwendung des erfindungsgemäßen Verbindungsverfahrens bei einem Heizkörper mit mäanderförmig gebogenem Konvektionsblech. Der Heizkörper insgesamt ist mit H bezeichnet und hat eine Heizplatte 11 und
ein Konvektionsblech 12. Der Heizkörper ist aus zwei
Schalen 13, 14 zusammengesetzt und enthält einen Hohlraum 15 für die Aufnahme eines flüssigen Wärmeträgermediums, z.B. Wasser. Das Wärmeträgermedium gibt einen Teil
seiner Wärme über die Schale 14 an das Konvektionsblech 12
ab.

Das Konvektionsblech liegt mit Wärmeaufnahmestreifen 16
an der Heizplatte 11 an und nimmt in diesem Bereich aus
der Heizplatte Wärme auf. Diese Wärme wird durch Wärmeleitung in Wärmeabgabeschleifen 17 geleitet. An diesen
streicht Luft entlang und nimmt Wärme auf. Das Konvektionsblech 12 ist mit der Heizplatte 11 auf die Weise verbunden,
die weiter oben anhand der Fig. 7 erläutert wurde. Dies
ist in den Fig. 11 bis 14 dargestellt und soll nachfolgend
betrachtet werden.

Die Wärmeaufnahmestreifen 16 sind mit Löchern 3 versehen,
die den Löchern 3 gemäß Fig. 7 entsprechen. Vor dem
Schweißvorgang wird auf die Wärmeaufnahmestreifen jeweils
ein Blechstreifen 4 aufgelegt, dessen Breite gleich der
Breite der Wärmeaufnahmestreifen ist. Dieser Zustand ist
auch in Fig. 13 dargestellt. Dort ist auch zu sehen, daß
die Wärmeaufnahmestreifen eine Auskrampung 17 aufweisen,
die von der Heizplatte 11 abragt. Der Blechstreifen 4 hat
eine entsprechende Auskrampung 18, in die die Auskrampung 17
paßt, wodurch das gesamte Konvektionsblech 12 auch schon
vor dem Verschweißen relativ zur Heizplatte 11 formschlüssig ausgerichtet und verbunden wird.

Nach dem Auflegen des Konvektionsbleches 12 und der Streifen 4 erfolgt die Verschweißung in gleicher Weise, wie dies
bereits anhand der Fig. 7 erläutert wurde. Hierbei werden in den zunächst (mit Ausnahme der Auskrampung 18) ebenen Blechstreifen Vertiefungen 19 eingezogen, wie dies in Fig. 14 dargestellt ist und mit Fig. 7 übereinstimmt.

Wenn für das Konvektionsblech 12 Aluminium verwendet wird, das eine sehr viel bessere Wärmeleitfähigkeit aufweist als Stahl, kann das Verhältnis von Höhe des Konvektionsbleches b zur Dicke a des Konvektionsbleches sehr viel größer gewählt werden, als dies bei Verwendung von Stahlblech für das Konvektionsblech möglich ist.

Die Erfindung wurde am Beispiel eines Wärmetauschers erläutert. Selbstverständlich könnten an diesem Wärmetauscher die Wärme aufnehmenden Teile auch der Konvektor 12 oder die Lamellen 1 sein. Beispielsweise könnte es sich um einen Wärmetauscher handeln, der Wärme aus der Umgebungsluft aufnimmt und an eine Sole abgibt, die innerhalb der Platte 2 (Fig. 1) bzw. 11 (Fig. 10 bis 14) zirkuliert. Das erfindungsgemäße Verbindungsverfahren ist auch nicht auf die Anwendung bei einem Wärmetauscher beschränkt, sondern überall dort anwendbar, wo nicht miteinander verschweißbare Materialien auf wirtschaftliche Art und Weise unter Anwendung der Punktschweißung miteinander verbunden werden sollen.

Ansprüche:

1. Verfahren zur Verbindung eines eine dünne Wand (1a) aufweisenden ersten Teiles (1) mit einer dünnen Wand eines zweiten Teiles (2) aus schweißbarem Material, wobei der erste Teil (1) aus einem Material besteht, das mit dem zweiten Teil (2) nicht verschweißbar ist und das einen niedrigeren Schmelzpunkt hat als der zweite Teil (2) und wobei die dünne Wand (1a) des ersten Teiles (1) an der dünnen Wand des zweiten Teiles (2) anliegt, dadurch gekennzeichnet, daß an der der Anlagestelle gegenüberliegenden Seite der dünnen Wand (1a) Zusatzmaterial (4; 20) angeordnet ist, das mit dem Material des zweiten Teiles (2) verschweißbar ist und daß das Zusatzmaterial (4; 20) unter Durchschmelzen der dünnen Wand (1a) des ersten Teiles (1) mit der dünnen Wand des zweiten Teiles (2) durch stellenweises Widerstandspreßschweißen verschweißt wird, wobei die für das Durchschmelzen nötige Wärme durch einen elektrischen Strom erzeugt wird, der mittels Elektroden (5, 6) durchgeleitet wird, die anschließend an das Durchschmelzen für das Widerstandspreßschweißen verwendet werden.

2. Verfahren zur Verbindung eines eine dünne Wand (1a) aufweisenden ersten Teiles (1; 12) mit einer dünnen Wand eines zweiten Teiles (2; 11) aus schweißbarem Material, wobei der erste Teil (1; 12) aus einem Material besteht, das mit dem zweiten Teil (2; 11) nicht verschweißbar ist und wobei die dünne Wand (1a) des ersten Teiles (1; 12) an der dünnen Wand des zweiten Teiles (2; 11) anliegt, dadurch gekennzeichnet, daß auf die der Anlagestelle gegenüberliegende Seite der dünnen Wand (1a) Zusatzmaterial in Form mindestens eines Bleches (4) aufgelegt wird, das mit dem Material des zweiten Teiles (2; 11) verschweißbar ist und daß das Blech (4) durch mindestens ein im ersten Teil (1; 12) vorher gefertigtes Loch unter Ausbeulung des Bleches mittels einer einen starken Strom zuführen-

- 2 -

den Schweißelektrode (5) hindurchgedrückt und am zweiten Teil (2; 11) zur Anlage gebracht und mit diesem Teil durch Widerstandspreßschweißen verschweißt wird, wobei die genannte Elektrode (5) das Blech bis zum Rand des Loches (3) im ersten Teil (1; 12) einbeult.

3. Verfahren nach Anspruch 1, dadurch gekennzeichnet, daß das Zusatzmaterial (4) in Form eines Bleches, z.B. eines Blechstreifens, aufgebracht wird.

4. Verfahren nach den Ansprüchen 2 und 3, dadurch gekennzeichnet, daß mit einem zusammenhängenden Blech (4) aus Zusatzmaterial mehrere Schweißstellen (7; 9) erfaßt werden (Fig. 7, 8).

5. Verfahren nach Anspruch 1, dadurch gekennzeichnet, daß das Zusatzmaterial (20) in Form kleiner Teilchen aufgebracht wird, z.B. in Form von Metallspänen oder dergleichen (Fig.9).

6. Anwendung des Verfahrens nach einem der vorhergehenden Ansprüche für die Befestigung eines ersten Teiles (1; 12) aus Aluminium an einem zweiten Teil (2; 11) aus Stahl, insbesondere für die Befestigung eines Konvektionsbleches (12) aus Aluminium an einer Heizplatte (11) aus Stahl.

0106261

1 / 2

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

0106261

![Europäisches Patentamt] **Europäisches Patentamt**

# EUROPÄISCHER RECHERCHENBERICHT

Nummer der Anmeldung

EP 83 10 9894

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | SCHWEISSTECHNIK, Band 22, Heft 8, 1972, DDR-Berlin J. SZYMANSKI "Punktschweissen aluminierter Bleche im Stahlbau", Seiten 361-363 <br> * Seite 361, rechte Spalte, letzter Absatz - Seite 362, linke Spalte; Absatz 1; Figur 2 * | 1 | B 23 K 11/16 <br> F 28 F 1/10 <br> F 28 F 3/02 |
| A | SCHWEISSTECHNIK, Band 22, Heft 8, 1972, DDR-Berlin | 3,4 | |
| | --- | | |
| X | DE-A-2 723 072 (BALDWIN-GEGENHEIMER CORP.) <br> * Seite 7, Absatz 3; Ansprüche; Figuren * | 2 | |
| A | | 3,4 | RECHERCHIERTE SACHGEBIETE (Int. Cl. 3) |
| | --- | | |
| X,A | US-A-4 343 982 (S. SCHWARTZ) <br> * Ansprüche; Figuren * | 2,3,4 | B 23 K 11/00 <br> B 23 K 31/00 <br> F 28 F 1/00 |
| | --- | | |
| A | Patent Abstracts of Japan Band 4, Nr. 161, 11. November 1980 Seite 75 M 40 & JP-A-55-110893 | 6 | F 28 F 3/00 <br> F 28 F 21/00 |
| | --- | | |
| A | AT-B- 256 388 (H.A. SCHLATTER AG) <br> * Figur 1 * | 6 | |
| | ----- | | |

Der vorliegende Recherchenbericht wurde für alle Patentansprüche erstellt.

| Recherchenort <br> BERLIN | Abschlußdatum der Recherche <br> 14-12-1983 | Prüfer <br> WUNDERLICH J E |
|---|---|---|